Europäisches Patentamt

(19) European Patent Office

Office européen des brevets

(11) Veröffentlichungsnummer: **0 072 470**
**A2**

(12) **EUROPÄISCHE PATENTANMELDUNG**

(21) Anmeldenummer: 82106846.7

(22) Anmeldetag: 29.07.82

(51) Int. Cl.³: **G 01 N 27/84**

(30) Priorität: 17.08.81 DE 3132390

(43) Veröffentlichungstag der Anmeldung:
23.02.83 Patentblatt 83/8

(84) Benannte Vertragsstaaten:
AT BE CH DE FR GB IT LI LU NL SE

(71) Anmelder: Mecapec S.A.
Postfach
CH-8716 Schmerikon(CH)

(72) Erfinder: Seiler, Daniel
St. Gallerstrasse 131
CH-8645 Jona(CH)

(72) Erfinder: Meili, Ernst
Unterbühlenstrasse 19
CH-8610 Uster(CH)

(72) Erfinder: Fuchs, Ernst
Oberseestrasse
CH-8716 Schmerikon(CH)

(74) Vertreter: Rottmann, Maximilian
Hug Interlizenz AG alte Zürcherstrasse 49
CH-8903 Birmensdorf/ZH(CH)

(54) **Verfahren und Einrichtung zur magnetischen Rissprüfung.**

(57) Bei der magnetischen Rissprüfung besteht das Problem ausreichender Risstiefendiskriminierung zur Unterdrückung von Störsignalen oder -abbildungen infolge nicht rissbedingter Unebenheiten. Zur Lösung wird bei einer Magnetisierung mit Vorzugsrichtung (V) der rissrichtungsabhängigen Haftwirkung (Py) auf das fehlerabbildende Magnetpulver eine Beblasung (Bx bzw. By) vor der Magnetpulver-Restdetektion durchgeführt, und zwar bei erstrebter Vergleichmässigung der resultierenden Haftwirkungs-Rissrichtungscharakteristik (Q2) in Richtung parallel zur Vorzugsrichtung (Bx) bzw. bei erstrebter Betonung der Richtcharakteristik (Q1) in Richtung quer zur Vorzugsrichtung (By). In beiden Fällen kann vergleichsweise stark beblasen werden, ohne die fehlerrelevanten Magnetpulverreste in den beabsichtigten Risswinkelbereichen zu stark abzutragen. Diese starke Beblasung entfernt die störbedingten, nicht fehlerrelevanten Magnetpulverreste weitgehend.

Fig. 2

Verfahren und Einrichtung zur magnetischen Rissprüfung

---

Die Erfindung bezieht sich auf ein Verfahren zur magnetischen
Rissprüfung nach dem Oberbegriff des Patentanspruches 1.
Die Erfindung erstreckt sich weiterhin auch auf ein solches
Verfahren, welches jedoch hinsichtlich der Magnetpulver Restdetektion unanhängig von der Einstellung einer Magnetisierung
mit ausgeprägter Haftwirkungs-Vorzugsrichtung ist. Ferner
gehört zum Gegenstand der Erfindung eine Einrichtung zur
Durchführung solcher Rissprüfungverfahren.

Bei der magnetischen Rissprüfung von ferromagnetischen Werkstücken mittels im Streufeldbereich anhaftenden Magnetpulvers
besteht weiterhin das Problem einer ausreichenden Risstiefendiskriminierung, d.h. eines Kontrastes zwischen den rissbedingten
und auswertungsrelevanten Magnetpulverresten einerseits und infolge nicht fehlerhafter Oberflächen-Unebenheiten anhaftendem,
nicht fehlerrelevanten Magnetpulverresten andererseits. Dieses
Problem stellt sich besonders schwerwiegend bei der Rissprüfung
an Werkstücken im Rohzustand, beispielsweise an Walzknüppeln. Aufgabe der Erfindung ist daher zunächst die Schaffung eines Rissprüfungsverfahrens mit verbessertem Fehler-Detektionskontrast. Die
Lösung dieser Aufgabe kennzeichnet sich bei einem Verfahren der
eingangs genannten Art erfindungsgemäss durch die Merkmale des
Patentanspruches 1.

Das demnach vorgesehene Beblasen des mit Magnetpulver beschickten und unter Magnetfeldwirkung stehenden Werkstückes parallel zur Haftwirkungs-Vorzugsrichtung des Magnetfeldes bewirkt eine Verminderung der Abhängigkeit der schliesslich im Rissbereich verbleibenden Magnetpulvermenge von der Rissrichtung, d.h. eine Vergleichsmässigung der Detektionsempfindlichkeit in Bezug auf die verschiedenen Rissrichtungen. Wegen des geringen Gradienten des Betrages der Magnetfeldstärke in Risslängsrichtung wird nämlich das Magnetpulver, welches auf parallel zur Blasrichtung gerichteten Rissen liegt, vergleichsweise am stärksten abgetragen, während andererseits die ebenfalls parallel zur Blasrichtung orientierte Haftwirkungs-Vorzugsrichtung für eine vergleichsweise starke Haftung des Magnetpulvers gerade an diesen Rissen sorgt und damit einen mehr oder weniger weitgehenden Ausgleich bewirkt. Aus diesem Grund kann ferner eine vergleichsweise starke Blaswirkung eingestellt und damit eine weitgehende Entfernung der nicht fehlerrelevanten Magnetpulverreste, d.h. eine hohe Diskriminierungsschärfe hinsichtlich der Risstiefe, erreicht werden, ohne dass insgesamt ein zu starkes Abblasen des Magnetpulvers und damit wieder eine Verschlechterung der Detektion eintritt.

Die erwähnte Verminderung der Abhängigkeit von der Rissrichtung stellt dabei einen wesentlichen selbständigen Vorteil dar.

Umgekehrt ergibt sich gemäss den Merkmalen des Patentanspruches 2 aufgrund des gleichen Wirkungsprinzips eine Lösung des Problems der verbesserten Diskriminierungsschärfe für den Fall, dass nicht eine verminderte Richtungsabhängigkeit, sondern gerade eine betonte Detektionsselektivität hinsichtlich der Rissrichtung beabsichtigt ist. Die hierfür angegebene Beblasung quer zur Haftwirkungs-Vorzugsrichtung des Magnetfeldes hat zur Folge, dass von den parallel zur Vorzugsrichtung orientierten Rissen wegen des hohen Gradienten des Betrages der Magnetfeldstärke in Rissquerrichtung im Vergleich mit den anderen Rissrichtungen nur wenig Magnetpulver abgetragen wird. Die Anzeigeintensität der Magnetpulver-Restdetektion wird also in der Vorzugsrichtung relativ verstärkt. Ausser dieser, hier erwünschten Beeinflussung des Detektions-Richtungsdiagramms ergibt sich wiederum die Möglichkeit einer vergleichsweise starken Beblasung, weil die Magnetpulverreste auf den in der Vorzugsrichtung orientierten Rissen nur wenig beeinflusst werden und daher insgesamt keine zu starke Abtragung zu befürchten ist.

Die vorstehenden Gegebenheiten bedeuten, dass eine Optimierung des Haftwirkungs-Richtungsdiagramms (Polardiagramm) in Abhängigkeit von der Rissrichtung neben der jeweils erwünschten Beeinflussung der Detektionscharakteristik (Vergleichmässigung der Richtungscharakteristik im Sinne einer möglichst gleichmässigen Detektion von Rissen in verschiedenen Richtungen einerseits bzw. Erhöhung der Richtungsselektivität andererseits) auch eine Verbesserung der Diskriminierungsschärfe zur Folge hat. Dies gilt besonders, nicht aber ausschliesslich, für die Anwendung einer Beblasung vor der Magnetpulver-Restdetektion. Auch bei anderen Massnahmen zur Entfernung des nicht oder schwach anhaftenden Magnetpulvers vom Werkstück, beispielsweise durch Vibration oder andere Massnahmen, bedeutet die optimale Ausprägung der Richtungscharakteristik die Möglichkeit einer verstärkten Pulverabtragung ohne zu starke Beeinträchtigung der fehlerbedingten Pulverrückstände. Demgemäss fallen unter den Erfindungsgegenstand auch gewisse Rissprüfungsverfahren, die auf dem gleichen Prinzip der Charakteristikoptimierung beruhen und - abgesehen von jeweils speziellen vorteilhaften Eigenschaften - die gleiche Erfindungsaufgabe lösen, jedoch nicht notwendig eine Beblasung vor der Magnetpulver-Restdetektion zur Voraussetzung haben.

In diesem Zusammenhang kennzeichnet sich eine erste Weiterbildung des Erfindungsgegenstandes durch die Merkmale des Patentanspruchs 6. Die danach vorgesehene Aufeinanderfolge mehrerer Magnetisierungen mit unterschiedlichen Haftwirkungs-Vorzugsrichtungen ermöglicht in Verbindung mit der summierenden Magnetpulver-Restdetektion eine resultierende Richtungscharakteristik, die in bestimmten Winkelbereichen oder auch über den gesamten Bereich von 360$^{\circ}$ einen kreisförmigen, d.h. rotationssymetrischen Verlauf hat. Die summierende Magnetpulver-Restdetektion kann dabei etwa durch Fixierung der rissbedingten Magnetpulverreste nach jedem Durchlauf unter Erhaltung der Reste aus dem jeweils vorangehenden Durchlauf vorgenommen werden.

Mit besonderem Vorteil wird auch hier eine Beblasung durchgeführt, die jedoch bei erstrebter Vergleichmässigung bzw. Symmetrierung der resultierenden Charakteristik wegen der Ueberlagerung der Einzelcharakteristiken nicht parallel, sondern etwa quer zur Haftwirkungs-Vorzugsrichtung der einzelnen Magnetisierungen gerichtet sein sollte. Damit erhalten die Einzelcharakteristiken eine auf die ihnen jeweils zugeordneten Winkelbereiche stärker konzentrierte Form, so dass sich durch die anschliessende Ueberlagerung keine unerwünschten Ungleichmässigkeiten ergeben. Umgekehrt kann durch zweckentsprechende Beblasung auch hier eine betonte Richtcharakteristik erreicht werden, jedoch empfiehlt sich dann im allgemeinen die Anwendung eines Einzeldurchlaufverfahrens der weiter oben erläuterten Art mit geringerem Verfahrensaufwand.

In sinngemässer Anwendung der vorstehend dargelegten Gesichtspunkte gehören zum Erfindungsgegenstand auch die Verfahrenslösungen nach Patentanspruch 9 und Patentanspruch 12. Die darin enthaltenen Massnahmen zur Erzeugung bestimmter Magnetfeldkonfigurationen erlauben ebenfalls die Einstellung von Detektionscharakteristiken mit jeweils gewünschtem Verlauf, insbesondere von solchen mit einer oder mehreren Haftwirkungs-Vorzugsrichtungen. Auch hier kommt insbesondere wieder eine Beblasung in geeigneter Richtung zur verstärkten Ausformung der jeweils gewünschten Charakteristik in Betracht.

Endlich dienen zur Lösung der gleichen Erfindungsaufgabe, nämlich einer Verbesserung der Diskriminierungsschärfe der Rissdetektion, die Verfahrensmassnahmen nach den Patentansprüchen 16 bis 19. Die Anwendung von Magnetpulvern mit den hier angegebenen Eigenschaften für die Rissprüfung ermöglicht insbesondere eine weitgehende Unterdrückung der u.a. von der Korngrössenverteilung abhängigen Haftwirkung im Bereich von Oberflächen-Unebenheiten und oberflächennahen Inhomogenitäten des Werkstoffes unterhalb einer Grenztiefe, wie sie für praktische Rissprüfungen im allgemeinen ausreichend ist. Damit wird der Störpegel der Rissdetektion wesentlich vermindert und eine schärfere Unterscheidung zwischen relevanten Fehlern und irrelevanten Form- und Material-Ungleichförmigkeiten ermöglicht. Hierfür gilt im einzelnen folgendes:

Die Haftneigung des Magnetpulvers infolge von schwachen Streufeldern nimmt mit abnehmender Korngrösse des Magnetpulvers stark zu. Hinsichtlich Feinheit der Abbildung und sicherer Haftwirkung an sich erwünschte Korngrössenverteilungen mit vergleichsweise grossem Anteil an geringen Korngrössen erweisen sich daher bezüglich des Kontrastes als problematisch. Die erfindungsgemässe Aufgabenlösung erstreckt sich daher weiterhin auf die Anwendung von Magnetpulvern mit einer Korngrössenverteilung, wie sie im Patentanspruch 16 gekennzeichnet ist. Es hat sich praktisch gezeigt, dass mit einer solchen Einschränkung des Anteiles an geringen Korngrössen ein im allgemeinen optimaler Kompromiss zwischen Abbildungskontrast und ausreichender Haftwirkung bzw. absoluter Riss-Detektionsempfindlichkeit erzielbar ist.

Weiterhin ist es im allgemeinen von Vorteil, auch den oberen Korngrössenbereich einzuschränken, wie dies durch die Merkmale des Patentanspruchs 17 gegeben ist. Sodann haben sich gewisse absolute Grenzen der Korngrössen des Magnetpulvers als besonders vorteilhaft erwiesen, wie sie aus den Merkmalen der Patentansprüche 18 und 19 hervorgehen.

Weitere Merkmale und Vorteile der Erfindung werden anhand der in den Zeichnungen dargestellten Ausführungsbeispiele erläutert. Hierfür gilt folgendes:

Fig. 1    zeigt das Prinzipschaltbild einer Einrichtung zur Erzeugung unterschiedlich gerichteter Magnetfelder in
einem stabförmigen Werkstück zur Magnetpulver-Rissprüfung.

Fig. 2    bis 8 zeigen verschiedene Tangential-Polardiagramme von
Oberflächen-Magnetfeldern und entsprechenden, resultierenden Haftwirkungs-Kraftfeldern in Abhängigkeit von
unterschiedlichen Rissrichtungen für verschiedene
Magnetfeldkonfigurationen.

Fig. 9    zeigt schematisch einen Abblasstrom an einem stabförmigen Werkstück mit Vorzugsrichtung der Magnetisierung und des resultierenden Haftwirkungs-Kraftfeldes.

Fig. 10   zeigt die Verteilungsdichte-Kurve einer Korngrössenverteilung für ein erfindungsgemäss anwendbares Magnetpulver in Form eines Histogrammes und

Fig. 11   zeigt die zugehörige Verteilungssummen-Kurve mit verschiedenen Vergleichskurven.

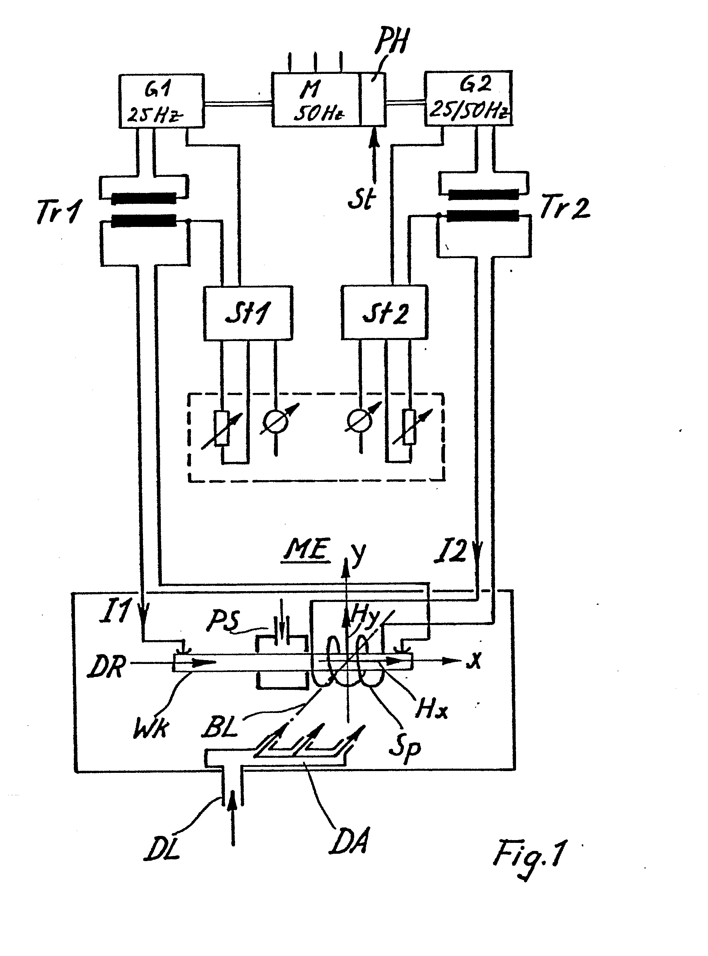

Bei der Einrichtung nach Fig. 1 sind mit einem gemeinsamen Antriebsmotor M zwei Wechselstromgeneratoren G1 und G2 gekoppelt.
Der Generator G2 ist beispielsweise für umschaltbare Frequenz ausgerüstet, etwa durch Polumschaltung, und mit dem Motor über einen
beispielsweise mechanischen Phasenschieber PH mit Stelleingang St
verbunden. Es versteht sich, dass im allgemeinen auch entsprechende
elektronische, statisch wirkende Einrichtungen für die Frequenz-und Phasensteuerung anwendbar sind. Weiterhin sind die Generatoren
mit Steuereinrichtungen St1 bzw. St2 verbunden, die eine Amplituden- und gegebenenfalls Frequenzeinstellung der Wechselströme
ermöglichen. Ueber Transformatoren Tr1 bzw. Tr2 sind die genannten Generatoren mit der Magnetfeld-Erregereinrichtung ME eines
zu prüfenden Werkstückes Wk an sich üblicher Art verbunden.

Die Magnetfelderregung erfolgt mittels einer Längsspule Sp mit
dem Strom I2 für ein axial zum stabförmigen Werkstück Wk gerichtetes Magnetfeld Hx sowie mittels axialer Selbstdurchflutung
mit dem Strom I1 für ein bezüglich der Stabachse zirkulares,
d.h. zum Stab tangentiales Magnetfeld Hy. Durch geeignete
Amplituden- und Phaseneinstellung der beiden Wechselströme I1
und I2 lassen sich die im nachfolgenden erläuterten Magnetfeld-
und Haftwirkungs-Polardiagramme erzeugen.

Das stabförmige Werkstück wird in an sich üblicher Weise über
bewegliche Klemmen mit dem Strom I1 beaufschlagt und während
der Magnetisierung in der durch Pfeil gekennzeichneten Durchlaufrichtung DR durch eine Pulverbeschickungsstation PS sowie
durch die Längsmagnetisierungsspule Sp gefördert. Während der
Magnetisierung wird das Werkstück mittels einer Druckluftzuführung DL über eine in ihrer Richtung in Bezug auf die Werkstückoberfläche in vorbestimmter Weise eingestellte Düsenanordnung DA mit einem Blasluftstrom BL bzw. einer Mehrzahl
solcher Ströme beaufschlagt. Besonders vorteilhaft erfolgt
die Magnetpulverbeschickung sowie die Beblasung unter Magnetisierung des Werkstückes in einer geschlossenen Kammer im
Durchlaufverfahren, wie dies schematisch in Fig. 1 angedeutet ist. Im Anschluss an diese Kammer durchläuft das Werkstück eine Fixierstation, beispielsweise eine solche an sich üblicher Art, in der die anhaftenden Magnetpulverreste verfestigt und damit einer optischen oder sonstigen Auswertung zugänglich gemacht werden.

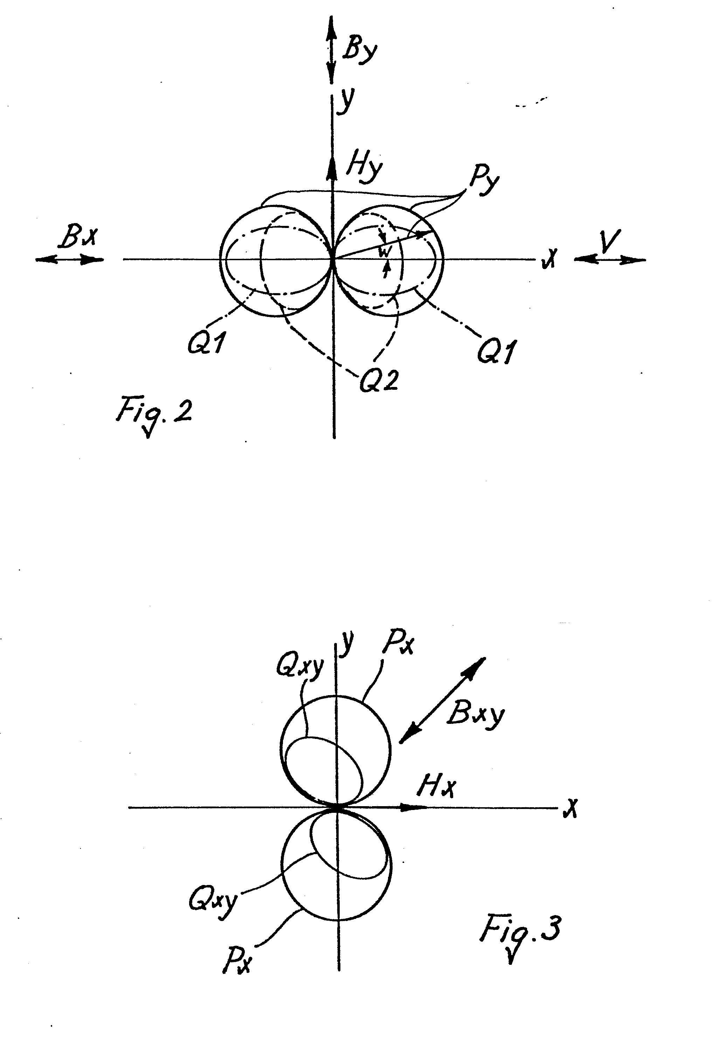

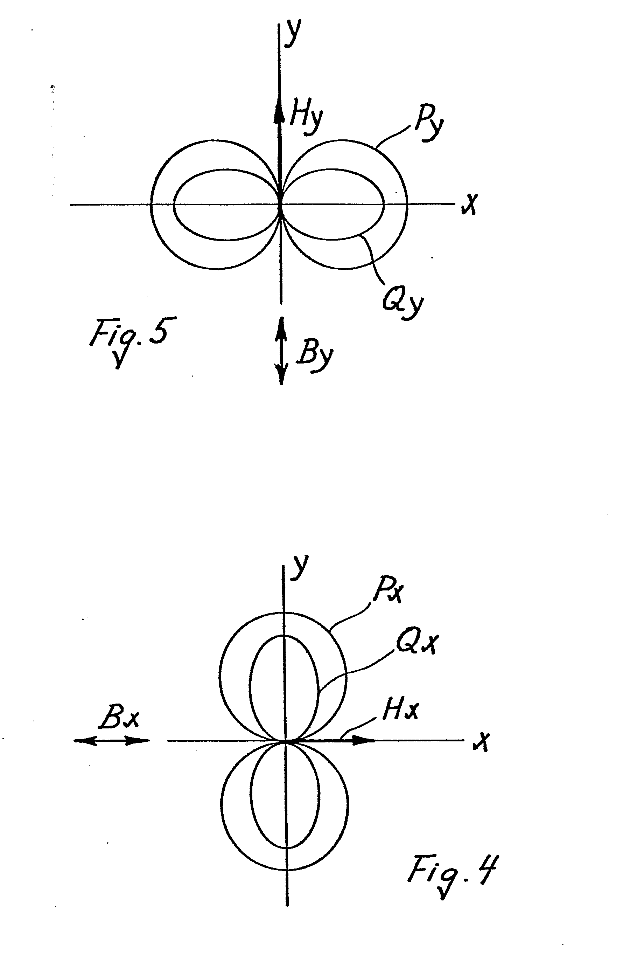

Fig. 2 zeigt eine Verfahrensausführung mit einem quer zur Werkstücklängsrichtung x eingeprägten Magnetfeld. Das in Fig. 2 angedeutete Achsenkreuz x, y mit dem Vektor Hy der Magnetfeldstärke bezieht sich auf eine Tangentialebene des stabförmigen, beispielsweise zylindrischen Werkstückes. In diesem Achsenkreuz ergibt sich unter der Feldwirkung für Werkstückrisse in allen möglichen Richtungen zwischen $0^o$ bis $360^o$ innerhalb der Tangentialebene ein Polardiagramm der (vom) Risswinkel $\psi$ abhängigen Magnetpulver-Haftungskraft Py (der Index y bezeichnet die hauptsächliche Richtung des zugehörigen Magnetfeldes), im folgenden kurz als "Haftwirkung" bezeichnet. Diese Haftwirkung entspricht infolge der Streufeldbildung im Rissbereich mit starkem Gradienten des Feldstärkebetrages in Rissquerrichtung sowie mit vernachlässigbarem Gradienten des Feldstärkebetrages in Risslängsrichtung im wesentlichen einer normal zur Werkstückoberfläche gerichteten Anziehungskraft, deren Betrag als proportional zu der quer zum Riss gerichteten Komponente des Feldstärkevektors Hy angenommen werden kann. Das Haftwirkungs-Polardiagramm ergibt sich demgemäss in Form einer in x-Richtung langgestreckten Doppelschleife deren Längsrichtung (x) eine Haftwirkungs-Vorzugsrichtung V darstellt. Risse in dieser Richtung werden also durch sich längs des Risses erstreckende, raupenförmige Magnetpulverreste relativ maximaler Stärke angezeigt.

Für eine richtungsselektive Rissprüfung kann eine solche Detektionscharakteristik gegebenenfalls ohne weiteres verwendet werden, jedoch empfiehlt sich für ausgeprägte Richtungsselektivität eine
Zusammendrängung des Polardiagramms in y-Richtung durch entsprechend
gerichtete Beblasung By. Durch diese Beblasung ergibt sich ein
resultierendes, doppelkeulenförmiges Haftwirkungs-Polardiagramm
Q1 als ausgeprägte Richtcharakteristik mit x-Vorzugsrichtung V.
Umgekehrt kann durch eine Beblasung Bx eine Zusammendrängung des
Diagramms in seiner Längsrichtung zu einem resultierenden Haftwirkungs-Polardiagramm Q2 erreicht werden, welches in einem vergleichsweise breiten Bereich des Risswinkels w beiderseits der
positiven und negativen x-Achse einen angenähert rotationssymmetrischen Verlauf mit geringer Aenderung des Radiusvektors
aufweist. Es können damit also Risse in einem grösseren Winkelbereich beiderseits der x-Richtung gleichermassen intensiv abgebildet werden. In beiden Fällen ist, wie in der Einleitung erläutert, eine vergleichsweise starke Beblasung zulässig und damit eine weitgehende Entfernung von nicht fehlerrelevanten
Magnetpulverresten erreichbar.

Fig. 3 zeigt analog zu den Verhältnissen nach Fig. 2 ausschliesliche Magnetisierung mit Hx, für das Beispiel gemäss Fig. 1 also
in Stablängsrichtung, mit bezüglich Fig. 2 entsprechend um 90°
verdrehtem Haftwirkungs-Polardiagramm Px. Die sinngemäss erreichbaren Deformationen dieses Diagrammes durch Beblasung in y- bzw.
x-Richtung sind hier nicht mehr angedeutet. Stattdessen findet
sich das Beispiel einer Beblasung Bxy unter etwa 45° zur x-Achse mit einem entsprechend schief verformten, resultierenden Haftwirkungs-Polardiagramm Oxy. Daraus ergibt sich, dass mit Hilfe der Beblasung weitgehend beliebige Anpassungen der Detektionscharakteristik an jeweils vorherrschende Rissverhältnisse einstellbar sind. Dies gilt grundsätzlich für eine magnetische Wechselfelderregung, wie sie mit der Einrichtung nach Fig. 1 durchführbar ist, aber auch für eine Gleichfelderregung, weil die Magnetpulver-Haftwirkung im wesentlichen nur vom Betrag der Feldstärke abhängig, also unabhängig vom Richtungssinn des Magnetfeldes ist.

Endlich versteht es sich, dass eine Abblaswirkung in einer vorgegebenen Richtung gegebenenfalls auch durch Ueberlagerung von bezüglich dieser Richtung gegensinnig in Winkel versetzten Blasströmen erreicht werden kann. Beispielsweise lässt sich mit zwei Blasströmen, die nach Art von Fig. 3 gegensinnig um 45$^{\circ}$ gegen eine Koordinatenachse versetzt gerichtet sind, eine Abblaswirkung in dieser Koordinatenrichtung erzielen. Im Durchlaufbetrieb können solche unterschiedlich gerichteten Abblasströme auch aufeinanderfolgend auf jeweils einen Bereich der Werkstückoberfläche zur Einwirkung gebracht werden. Im allgemeinen ist allerdings die Summenwirkung einer solchen sukzessiven Beblasung in unterschiedlichen Richtungen nicht gleichwertig einer einfachen Beblasung in Richtung der geometrischen Resultierenden beider Blasrichtungen.

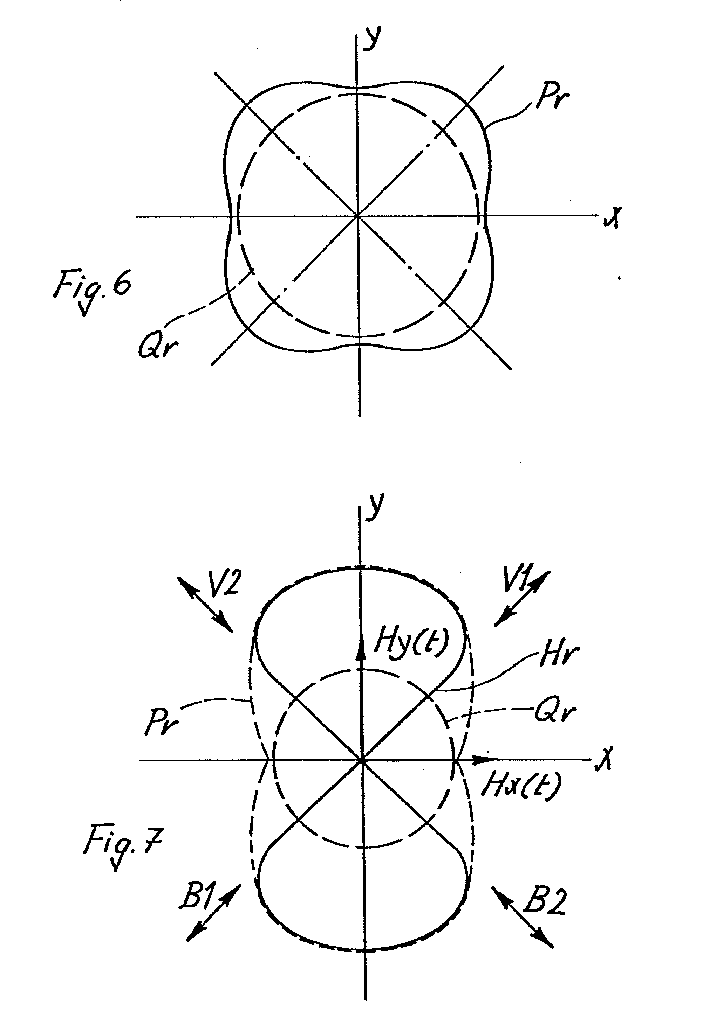

Bei der Magnetfeldkonfiguration nach Fig. 6 werden in zwei aufeinanderfolgenden Werkstückdurchkäufen in der Erregungseinrichtung ME zwei zueinander rechtwinklige Wechsel-Magnetfelder in Längs- bzw. Querrichtung zum stabförmigen Werkstück erzeugt. In den Polardiagrammen nach Fig. 4 und 5 sind die entsprechenden Magnetfelder Hx bzw. Hy gesondert angedeutet. Für diese beiden Magnetfelder ergibt sich ein Polardiagramm der Haftwirkung auf die Magnetpulverpartikel in Abhängigkeit von der Rissrichtung, die hier variabel über einen Winkelbereich von 360° angenommen ist. Für das Magnetfeld Hx ergibt sich das zweiteilige Haftwirkungsdiagramm Px und für das Magnetfeld Hy das entsprechend rechtwinklig versetzte Haftwirkungsdiagramm Py. Durch Summierungsdetektion bzw. Summierungsabbildung der Magnetpulverreste aus beiden Durchläufen ergibt sich eine Gesamt-Detektion entsprechend einem Gesamt-Haftwirkungsdiagramm Pr gemäss Fig. 6, welches die Gesamt-Detektionsempfindlichkeit gegenüber Rissen in unterschiedlichen Richtungen kennzeichnet. Ersichtlich ergeben sich demnach für alle Rissrichtungen relevante Abbildungen, jedoch mit beträchtlicher Ungleichförmigkeit über den gesamten Winkelbereich.

Eine weitere Vergleichmässigung der Charakteristik im Sinne einer annähernden Richtungsabhängigkeit der Rissdetektion lässt sich durch Beblasung der einzelnen Magnetpulveransammlungen bei den aufeinanderfolgenden Durchläufen mit jeweils anschliessender Fixierung erreichen. Entsprechend sind Fig. 4 und 5 durch Beblasung in Richtung Bx bzw. By Deformationen Qx bzw. Qy der ursprünglichen Haftwirkungs-Polardiagramme Px bzw. Py angedeutet, wie sie in der Ueberlagerung gemäss Fig. 6 ein annähernd kreisförmiges, resultierendes Haftwirkungs-Polardiagramm Qr liefern.

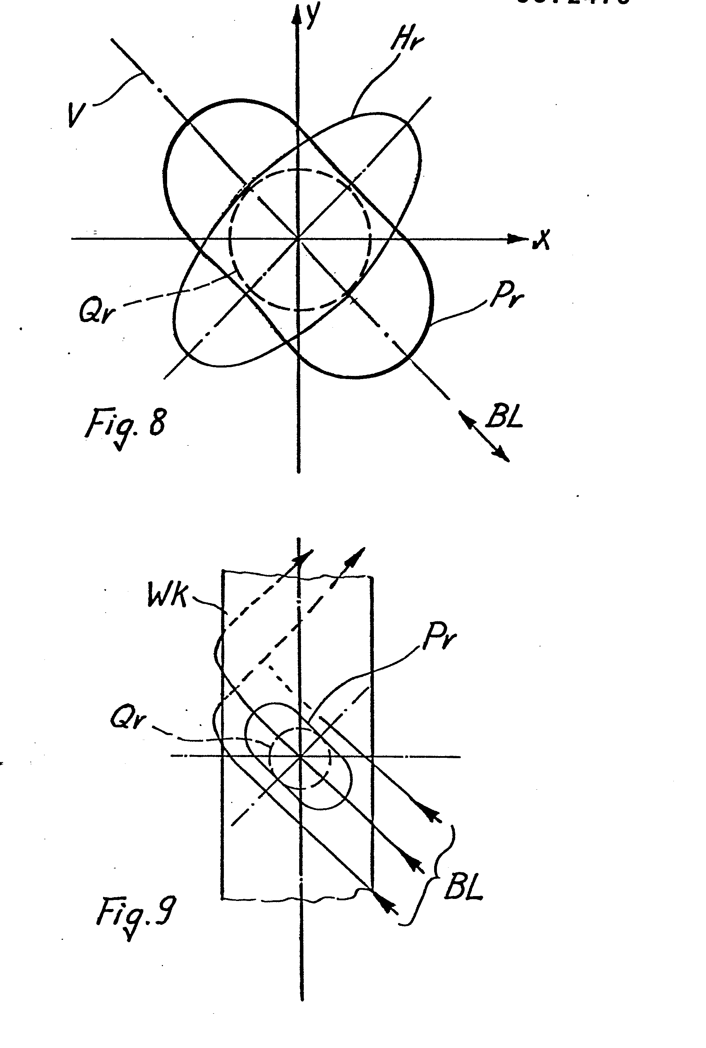

Bei der Magnetfeldkonfiguration nach Fig. 7 wird mit Hilfe zweier verschiedenfrequenter Magnetfelder Hx und Hy ein resultierendes magnetisches Drehfeld Hr entsprechend einem im Nullpunktbereich eingeschnürten Polardiagramm erzeugt. Es ergibt sich in Abhängigkeit von den unterschiedlichen Rissrichtungen ein resultierendes Haftwirkungs-Polardiagramm Pr, welches relevante Detektionen für alle Rissrichtungen zulässt.

Die verbleibenden Abweichungen von der Rotationssymmetrie des Diagrammes von Pr, nämlich jeweils in den vier Quadranten liegende Ausbuchtungen mit entsprechenden Haftwirkungs-Vorzugsrichtungen V1 und V2, lassen sich durch aufeinanderfolgende Beblasung in den Richtungen B1 und B2 praktisch vollständig beseitigen, womit sich ein annähernd kreisförmiges, resultierendes Haftwirkungs-Polardiagramm Qr ergibt. Es ist hervorzuheben, dass die Blasströme in den Richtungen B1 und B2 nicht gleichzeitig überlagert werden dürfen, weil sich dann eine resultierende Beblasung in y-Richtung ergeben würde, die eine von der aufeinanderfolgenden Beblasung in den Richtungen B1 und B2 grundsätzlich verschiedene Wirkung haben würde.

Im Beispielsfall ist die Frequenz von Hx entsprechend der doppelten Frequenz von Hy angenommen. Durch andere Frequenzeinstellungen lassen sich im jeweiligen Anwendungsfall geeignete, andersartige Diagramme erzielen.

Fig. 8 zeigt eine Magnetfeldkonfiguration mit elliptischem, in seiner Hauptachse schräg zur Stablängsrichtung x geneigtem Polardiagramm eines resultierenden magnetischen Drehfeldes Hr (die tangentiale Stab-Querrichtung ist entsprechend mit y bezeichnet). Für variable Rissrichtungen zwischen $0^{\circ}$ und $360^{\circ}$ ergibt sich ein resultierendes Haftwirkungs-Polardiagramm Pr mit einer Einschnürung im Mittelbereich und mit einer ausgeprägten Vorzugsrichtung V. Zur resultierenden Symmetrierung des Diagrammes wird vorteilhaft eine Beblasung parallel zu der Vorzugsrichtung V vorgenommen. Im übrigen lässt sich die Einschnürung durch geeignete Amplituden- bzw. Exzentrizitätseinstellung de Magnetfeld-Polardiagrammes weiter vermindern.

Hervorzuheben ist, dass die Einstellung eines magnetischen Tangential-Drehfeldes bei den Ausführungen nach Fig. 7 und 8 gleichermassen für eine weitgehend richtungsunabhängige Rissdetektion massgebend ist. Ein solches Drehfeld wird durch geeignete Phasenverschiebung zwischen den Stromdurchflutungen und damit zwischen den im Winkel zueinander räumlich versetzten Magnetfeldern beispielsweise mittels einer Einrichtung nach Fig. 1 erzeugt. Weiter ist hervorzuheben, dass sich mit solchen Drehfeldern ein zeitlicher Nulldurchgang des Feldstärkenbetrages sowohl gezielt erreichen wie auch vermeiden lässt. So ist infolge der Nullpunkteinschnürung im Polardiagramm nach Fig. 7 ein solcher Nulldurchgang vorhanden, während er infolge des elliptischen Polardiagrammes bei der Ausführung nach Fig. 8 nicht vorhanden ist. Ein solcher zeitlicher Nulldurchgang begünstigt die Abblaswirkung, während die Vermeidung des Nulldurchganges beispielsweise bei ungünstigen Haftverhältnissen des Magnetpulvers oder zwecks absoluter Verstärkung der Haftwirkung angezeigt sein kann.

Fig. 9 zeigt für eine Magnetkonfiguration nach Fig. 8 schematisch einen Blasluftstrom B, der schraubenlinienförmig um das stabförmige Werkstück Wk geführt ist und somit an allen Stellen der Werkstückoberfläche bezüglich des Magnetfeldes die gleiche Richtung hat.

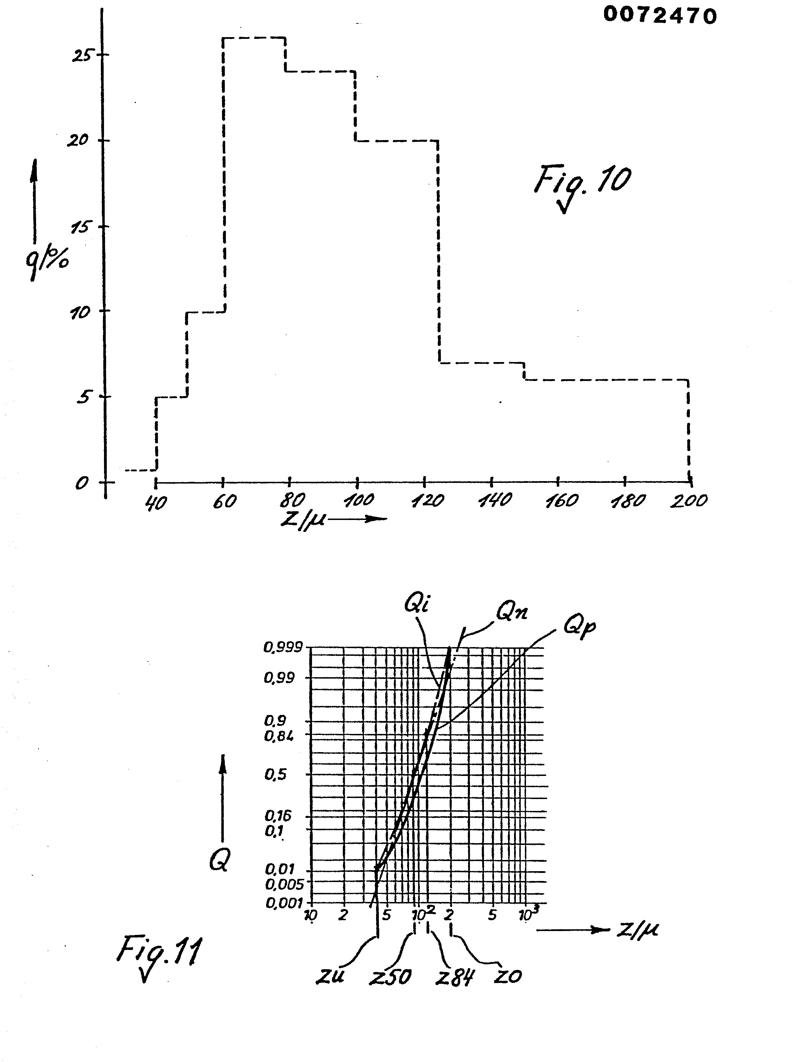

Endlich zeigt Fig. 10 ein Diagramm einer Korngrössen-Verteilungsdichte q mit für die Zwecke der Streufelddetektionen eingeschränktem unterem und oberem Korngrössenbereich. Bei dieser Korngrössenverteilung ist wesentlich das Vorhandensein eines vergleichsweise grossen Anteiles an mittleren Korngrössen, so dass Störeffekte einerseits infolge zu stark anhaftenden Magnetpulvers geringer Korngrösse und andererseits infolge von zusätzlichen Streufeldern im Bereich grosser Magnetkörner weitgehend vermindert sind. Im übrigen hat sich eine untere Grenzkorngrösse im Bereich zwischen 40 und 80 micron, vorzugsweise bei etwa 70 micron, für die meisten praktischen Anwendungen als vorteilhaft erwiesen. Wegen der bereits erwähnten Störeffekte bei gröberen Korngrössen wird erfindungsgemäss mit Vorteil eine obere Grenzkorngrösse von etwa
200 micron eingehalten.

Eingehende Untersuchungen haben ferner zu einer allgemeiner
anwendbaren Bemessungsregel für die Korngrössenverteilung
von Magnetpulvern für Zwecke der Rissprüfung geführt, die
einerseits siebtechnisch vergleichsweise einfach zu verwirklichen ist, andererseits aber eine vorteilhafte und im allgemeinen ausreichende Einschränkung der Korngrössen im oberen
und unteren Bereich mit sich bringt. Hierzu ist in Fig. 11
eine Verteilungssummen-Kurve $Qi$ angedeutet, die im Anschluss
an die untere Grenzkorngrösse steiler als eine Potenzkurve
$Qp$ und im Anschluss an die obere Grenzkorngrösse steiler
als eine Normalverteilungskurve $Qn$ verläuft. Die Vergleichs-
Potenzkurve $Qp$ verläuft durch die gleiche obere und untere
Grenzkorngrösse $zo$ bzw. $zo$ wie die erfindungsgemäss bemessene
Verteilungssummen-Kurve $Qi$ (entsprechend der Verteilungsdichte-
Kurve nach Fig. 10), während die Vergleichs-Normalverteilungskurve $Qn$ die gleiche Standardabweichung $s$ und den gleichen Medianwert $z50$ wie die Kurve $Qi$ aufweist.
$z50$ ist hierbei gemäss üblicher Definition diejenige Korngrösse $z$ (äquivalenter Korndurchmesser bei nicht kugelförmigen Partikeln), bei der die Verteilungssumme $Q$ den Wert
$0,5$ (50%) hat. Für die Standardabweichung gilt $s = \ln(z84/z50)$,
mit $z84$ als Korngrösse für den Wert $0,84$ (84%) der Verteilungssumme $Q$ .

Patentansprüche

1. Verfahren zur magnetischen Rissprüfung von insbesondere stabförmigen Werkstücken aus ferromagnetischen Werkstoffen, mit Streufeldabbildung durch Aufbringen von Magnetpulver und Detektion von anhaftenden Magnetpulverresten, wobei an mindestens einem Oberflächenbereich des Werkstückes eine Magnetisierung durchgeführt wird, welche für Risse in mindestens einer, auf eine Tangentialebene der Werkstückoberläche bezogenen Vorzugsrichtung eine gegenüber den benachbarten Rissrichtungen grössere Magnetpulver-Haftwirkung aufweist, dadurch gekennzeichnet, dass für eine Verminderung der Veränderung der Detektionsempfindlichkeit in Abhängigkeit von der Rissrichtung in mindestens einem Riss-Winkelbereich vor der Magnetpulver-Restdetektion eine Beblasung wenigstens annähernd in Richtung parallel zu der Haftwirkungs-Vorzugsrichtung durchgeführt wird.

2. Verfahren zur magnetischen Rissprüfung von insbesondere stabförmigen Werkstücken aus ferromagnetischen Werkstoffen, mit Streufeldabbildung durch Aufbringen von Magnetpulver und Detektion von anhaftenden Magnetpulverresten, wobei an mindestens einem Oberflächenbereich des Werkstückes eine Magnetisierung durchgeführt wird, welche für Risse in mindestens einer, auf eine Tangentialebene der Werkstückoberfläche bezogenen Vorzugsrichtung eine gegenüber den benachbarten Rissrichtungen grössere Magnetpulver-Haftwirkung aufweist, dadurch gekennzeichnet, dass für eine verstärkte Konzentration der Detektionsempfindlichkeit im Bereich der Haftwirkungs-Vorzugsrichtung vor der Magnetpulver-Restdetektion eine Beblasung wenigstens annähernd in Richtung quer zu der Haftwirkungs-Vorzugsrichtung durchgeführt wird.

3. Verfahren nach Anspruch 1 oder 2, dadurch gekennzeichnet, dass für eine Magnetisierung mit einer Mehrzahl von unterschielichen Haftwirkungs-Vorzugsrichtungen an mindestens einem Bereich der Werkstückoberfläche in zeitlicher Aufeinanderfolge verschiedene Beblasungen mit entsprechend unterschiedlichen Richtungen durchgeführt werden.

4. Verfahren nach Anspruch 3, dadurch gekennzeichnet, dass jeweils ein Oberflächenbereich des Werkstückes im Durchlauf aufeinanderfolgend durch Blasströme von unterschiedlicher Richtung geführt wird.

5. Verfahren nach einem der vorangehenden Ansprüche, dadurch gekennzeichnet, dass für ein stabförmiges Werkstück ein den Stabumfang wenigstens abschnittsweise schraubenlinienförmig umgebender Blasstrom erzeugt wird.

6. Verfahren zur magnetischen Rissprüfung von insbesondere stabförmigen Werkstücken aus ferromagnetischen Werkstoffen, mit Streufeldabbildung durch Aufbringen von Magnetpulver und Detektion der, vorzugsweise nach Durchführung einer Beblasung, anhaftenden Magnetpulverreste, wobei an mindestens einem Oberflächenbereich des Werkstückes eine Magnetisierung durchgeführt wird, welche für Risse in mindestens einer, jeweils auf eine Tangentialebene der Werkstückoberfläche bezogenen Vorzugsrichtung eine gegenüber den benachbarten Rissrichtungen grössere Magnetpulver-Haftwirkung aufweist, insbesondere nach einem der vorangehenden Ansprüche, dadurch gekennzeichnet, dass jeweils an mindestens einem Bereich der Werkstückoberfläche in zeitlicher Aufeinanderfolge mindestens zwei Magnetisierungen mit unterschiedlichen Haftwirkungs-Vorzugsrichtungen sowie mindestens eine bezüglich der verschiedenen Magnetisierungen summierend wirkende Magnetpulver-Restdetektion durchgeführt werden.

7. Verfahren nach Anspruch 6, gekennzeichnet durch die zeitlich aufeinanderfolgende Durchführung mindestens zweier Magnetisierungen mit zueinander wenigstens annähernd rechtwinkligen Haftwirkungs-Vorzugsrichtungen.

8. Verfahren nach Anspruch 6 oder 7, dadurch gekennzeichnet, dass für eine Verminderung der Veränderung der Detektionsempfindlichkeit in Abhängigkeit von der Rissrichtung in mindestens einem Riss-Winkelbereich vor der Magnetpulver-Restdetektion jeweils eine Beblasung in Richtung wenigstens annähernd quer zu den aufeinanderfolgend zur Wirkung kommenden Haftwirkungs-Vorzugsrichtungen durchgeführt wird.

9. Verfahren zur magnetischen Rissprüfung von insbesondere stabförmigen Werkstücken aus ferromagnetischen Werkstoffen, mit
Magnetisierung mindestens eines Werkstückbereiches durch
wenigstens zwei zueinander im Winkel gerichtete, zeitlich
periodische Magnetfelder und mit Streufeldabbildung durch
Aufbringen von Magnetpulver und Detektion von anhaftenden
Magnetpulverresten, insbesondere nach einem oder mehreren
der vorangehenden Ansprüche, dadurch gekennzeichnet, dass die
beiden zueinander im Winkel gerichteten Magnetfelder einen
gleichfrequenten und phasenverschobenen Zeitverlauf des Betrages ihrer magnetischen Feldstärke aufweisen.

10. Verfahren nach Anspruch 9, dadurch gekennzeichnet, dass die
Zeitverläufe der zueinander im Winkel gerichteten Magnetfelder
entsprechend einem elliptischen Polardiagramm der räumlichen
Amplitudenverteilung des resultierenden Drehfeldes aufeinander
abgestimmt sind.

11. Verfahren nach Anspruch 9 oder 10, insbesondere für die Rissprüfung an stabförmigen Werkstücken, dadurch gekennzeichnet,
dass die Magnetisierung mittels zweier zueinander rechtwinklig angeordneter Magnetfelder vorgenommen wird, die vorzugsweise in Längs- und Querrichtung des Stabes gerichtet
sind.

12. Verfahren zur magnetischen Rissprüfung von insbesondere stabförmigen Werkstücken aus ferromagnetischen Werkstoffen, mit Magnetisierung mindestens eines Werkstückbereiches durch wenigstens zwei zueinander im Winkel gerichtete, zeitlich periodische Magnetfelder und mit Streufeldabbildung durch Aufbringen von Magnetpulver und Detektion von anhaftenden Magnetpulverresten, insbesondere nach einem oder mehreren der vorangehenden Ansprüche, dadurch gekennzeichnet, dass die Magnetisierung mittels wenigstens zweier zueinander im Winkel gerichteter, zeitlich periodischer Magnetfelder von unterschiedlicher, endlicher Frequenz erzeugt wird.

13. Verfahren nach Anspruch 12, dadurch gekennzeichnet, dass die Zeitverläufe der beiden verschiedenfrequenten Magnetfelder entsprechend mindestens einer Haftwirkungs-Vorzugsrichtung für die Magnetpulver-Restdetektion aufeinander abgestimmt sind.

14. Verfahren nach Anspruch 12 oder 13, dadurch gekennzeichnet, dass die Zeitverläufe der verschiedenfrequenten Magnetfelder entsprechend einem im Nullpunktbereich eingeschnürten Polardiagramm der räumlichen Amplitudenverteilung des resultierenden Drehfeldes aufeinander abgestimmt sind.

15. Verfahren nach Anspruch 14, dadurch gekennzeichnet, dass die Frequenzen der beiden Magnetfelder für eine wenigstens annähernd rechtwinklige räumliche Versetzung im Verhältnis 1 : 2 bemessen sind.

16. Verfahren zur magnetischen Rissprüfung von insbesondere stabförmigen Werkstücken aus ferromagnetischen Werkstoffen, mit
Magnetisierung mindestens eines Werkstückbereiches und mit
Streufeldabbildung durch Aufbringen von Magnetpulver und
Detektion von anhaftenden Magnetpulverresten, vorzugsweise
mit Durchführung einer Beblasung vor der Magnetpulver-Restdetektion, insbesondere nach einem oder mehreren der Ansprüche 1 bis 15, gekennzeichnet durch die Verwendung eines
Magnetpulvers mit einer Korngrössenverteilung, deren Ver-
teilungssummen-Kurve $(Q_i)$ im Vergleich zu einer Potenzteilung $(Q_p)$ bei gleicher unterer und oberer Grenzkorngrösse
$(z_u, z_o)$ im Anschluss an die untere Grenzkorngrösse $(z_u)$
einen wenigstens abschnittsweise steileren Verlauf aufweist.

17. Verfahren zur magnetischen Rissprüfung von insbesondere stabförmigen Werkstücken aus ferromagnetischen Werkstoffen, mit
Magnetisierung mindestens eines Werkstückbereiches und mit
Streufeldabbildung durch Aufbringen von Magnetpulver und
Detektion von anhaftenden Magnetpulverresten, vorzugsweise
mit Durchführung einer Beblasung vor der Magnetpulver-Restdetektion, insbesondere nach Anspruch 16, gekennzeichnet
durch die Verwendung eines Magnetpulvers mit einer Korngrössenverteilung, deren Verteilungssummen-Kurve $(Q_i)$ im
Vergleich zu einer Korngrössen-Normalverteilung $(Q_n)$ bei
gleicher Standardabweichung $(s)$ und gleichem Medianwert $(z_{50})$ im
Anschluss an die obere Grenzkorngrösse $(z_o)$ einen wenigstens
abschnittsweise steileren Verlauf aufweist.

18. Verfahren zur magnetischen Rissprüfung von insbesondere stabförmigen Werkstücken aus ferromagnetischen Werkstoffen, mit Magnetisierung mindestens eines Werkstückbereiches und mit Streufeldabbildung durch Aufbringen von Magnetpulver und Detektion von anhaftenden Magnetpulverresten, vorzugsweise mit Durchführung einer Beblasung vor der Magnetpulver-Restdetektion, insbesondere nach Anspruch 16 oder 17, gekennzeichnet durch die Verwendung eines Magnetpulvers mit einer unteren Grenzkorngrösse (zu) im Bereich zwischen 40 und 80 micron, vorzugsweise im Bereich zwischen 70 und 75 micron.

19. Verfahren zur magnetischen Rissprüfung von insbesondere stabförmigen Werkstücken aus ferromagnetischen Werkstoffen, mit Magnetisierung mindestens eines Werkstückbereiches und mit Streufeldabbildung durch Aufbringen von Magnetpulver und Detektion von anhaftenden Magnetpulverresten, vorzugsweise mit Durchführung einer Beblasung vor der Magnetpulver-Restdetektion, insbesondere nach einem der Ansprüche 16 bis 18, gekennzeichnet durch die Verwendung eines Magnetpulvers mit einer oberen Grenzkorngrösse (zo) von etwa 200 micron.

20. Einrichtung zur Durchführung des Verfahrens nach einem der vorangehenden Ansprüche, dadurch gekennzeichnet, dass für die Erzeugung von gegeneinander im Winkel räumlich versetzten Magnetfeldern (Hx, Hy) je ein eigener Wechselstrom-generator (G1, G2) vorgesehen ist und dass diese beiden Wechselstromgeneratoren miteinander in ihrer Phasenlage gekoppelt sind.

21. Einrichtung nach Anspruch 20, dadurch gekennzeichnet, dass die beiden Wechselstromgeneratoren (G1, G2) an einen gemeinsamen Grundfrequenzgeber (M) angeschlossen sind.

22. Einrichtung nach Anspruch 20 oder 21, dadurch gekennzeichnet, dass wenigstens einer der beiden Wechselstromgeneratoren (G2) mit einem Amplituden-, Frequenz- und/oder Phasenstellglied (St2, PH) gekoppelt ist.

Fig.1

Fig. 2

Fig. 3

Fig.5

Fig.4

Fig. 6

Fig. 7

5/6

0072470

Fig. 8

Fig. 9

0072470

Fig. 10

Fig.11